# EUROPÄISCHE PATENTSCHRIFT

(11) **EP 3 458 205 B1**
(45) Veröffentlichungstag und Bekanntmachung des Hinweises auf die Patenterteilung: **04.09.2024**
(21) Anmeldenummer: 17727484.2
(22) Anmeldetag: 18.05.2017
(51) Int. Cl.: B08B 7/02, B29C 64/35, B22F 10/68, B33Y 40/20, B22F 10/73

(54) **ENTPULVERN EINES RAPID-PROTOTYPING-BAUTEILS**
DEPOWDERING A RAPID PROTOTYPING COMPONENT
ÉLIMINATION DE LA POUSSIÈRE D'UNE PIÈCE DE PROTOTYPAGE RAPIDE

(30) Priorität: 19.05.2016 DE 102016109212
(43) Veröffentlichungstag der Anmeldung: 27.03.2019
(73) Patentinhaber: FIT AG, 92331 Lupburg (DE)
(72) Erfinder: FRUTH, Carl, 92331 Parsberg (DE)
(74) Vertreter: Schneider, Andreas
(86) Internationale Anmeldenummer: PCT/EP2017/000599
(87) Internationale Veröffentlichungsnummer: WO 2017/198335

(56) Entgegenhaltungen:
- EP-A2- 2 674 283
- WO-A1-2015/071184
- DE-A1- 102012 106 141
- DE-A1- 102014 010 501
- US-A- 5 662 158
- US-A1- 2016 074 940
- SING SWEE LEONG ET AL: "Laser and electron-beam powder-bed additive manufacturing of metallic implants: A review on processes, materials and designs", JOURNAL OF ORTHOPAEDIC RESEARCH, vol. 34, no. 3, 29 October 2015 (2015-10-29), US, pages 369 - 385, XP055822812, ISSN: 0736-0266, DOI: 10.1002/jor.23075

## Beschreibung

Die Erfindung betrifft ein Verfahren zum Entpulvern eines Bauteils, das mit einem pulverbasierten Rapid-Prototyping-Verfahren hergestellt wurde. Darüber hinaus betrifft die Erfindung die Verwendung eines Vibrationsgebers.

Bei pulverbasierten Rapid-Prototyping-Verfahren, wie beispielsweise dem selektiven Lasersintern (SLS), dem selektiven Laserschmelzen (SLM) oder dem selektiven Elektronenstrahlschmelzen (SEBM) werden pulverförmige Kunststoffe oder Metalle, wie beispielsweise Nylon, Titan, Aluminium oder auch Mehrkomponenten-Metallpulver verarbeitet. Der Aufbau des herzustellenden Bauteils erfolgt dabei schichtweise. Das Pulver wird dabei in jeder Schicht lokal erhitzt und damit verfestigt. Dabei wird das Pulver entweder mittels Laser lokal gesintert (SLS-Verfahren) bzw. lokal aufgeschmolzen (SLM-Verfahren) oder aber anstelle eines Lasers wird ein Elektronenstrahl verwendet (SEBM-Verfahren). Nach der Fertigstellung einer Schicht wird die Bauteilplattform, auf der sich das aufzubauende Bauteil befindet, abgesenkt und eine neue Schicht Pulver aufgetragen, welche dann erneut entsprechend der Bauteilvorgaben lokal verfestigt wird, solange, bis das fertige 3D-Bauteil entstanden ist.

Nicht verfestigtes Pulver muß nach dem Herstellungsprozeß aufwendig entfernt werden. Nach einer optionalen Vorentpulverung, bei der beispielsweise der Baubehälter um 180° gedreht wird, damit der Großteil des losen Pulvers aus dem Bauteil herausfallen kann, findet die eigentlichen Entpulverung im Anschluß an den Aufbauprozeß statt. Dabei wird versucht, die Pulverreste durch Schütteln des Bauteils zu entfernen oder aber aus Öffnungen und Hohlräumen des Bauteils herauszublasen. Auch eine mechanische Bearbeitung mit Hilfe von Pinseln oder dergleichen wird praktiziert.

Nachteilig bei diesen bisher bekannten Ansätzen zum Entpulvern von Bauteilen ist es, daß das Entpulvern nicht automatisiert abläuft. Statt dessen sind stets bauteilindividuelle Maßnahmen erforderlich, die manuell oder allenfalls semi-automatisch durchgeführt werden. Dies ist vergleichsweise zeitaufwendig und stellt daher einen nicht zu vernachlässigenden Kostenfaktor bei der Rapid-Prototyping-Fertigung dar.

Zu beachten ist außerdem, daß der entstehende Pulverstaub gesundheitsschädlich sein kann. Ebenso können sich beim Ausblasen bzw. Absaugen des losen Pulvers explosive Gemische bilden, beispielsweise bei Aluminium- oder Titanpulver.

Da die Pulverreste oftmals wie in einem Kreislauf einer erneuten Verwendung als Aufbaumaterial zugeführt werden, muß in der Regel eine Feuchtigkeitsaufnahme des Pulvers verhindert werden, was typischerweise dadurch erfolgt, daß das Ausblasen mit Stickstoff oder einem anderen Inertgas erfolgt, wodurch vergleichsweise hohe Zusatzkosten entstehen können.

In EP 2 674 283 A2, welches ein Verfahren gemäß dem Oberbegriff des Anspruchs 1 und eine Verwendung gemäß dem Oberbegriff des Anspruchs 7 offenbart, beschrieben, wie nach der Fertigstellung des Bauteils überschüssiges Pulver von der Aubauplattform innerhalb der Prozeßkammer des Schichtaufbauprozesses abgesaugt wird. Ergänzend zu einer Pulverabsaugeinrichtung, insbesondere in Form einer Absaugglocke, kann dabei eine Pulverauflockerungseinrichtung, beispielsweise in Form einer Ultraschall-Rütteleinrichtung, zum Einsatz kommen, um das abzusaugende Pulver auf der Bauplattform aufzulockern.

In DE 10 2012 106 141 A1 ist das Entpacken eines Bauteils aus einer Partikelmaterial-Schüttung innerhalb der Prozeßkammer des Schichtaufbauprozesses beschrieben, zu welchem Zweck die Schüttung in ein Fließbett überführt wird, so daß loses Partikelmaterial fluidisiert wird und nach unten aus der Prozeßkammer heraus abgelassen werden kann. Zum Erzeugen des Fließbetts wird vorgeschlagen, die Partikelmaterial-Schüttung mit Schallwellen, z.B. Ultraschallwellen, zu beschallen.

Eine Aufgabe der vorliegenden Erfindung ist es, das Entpulvern eines Bauteils, das mit einem pulverbasierten Rapid-Prototyping-Verfahren hergestellt wurde, zu vereinfachen.

Diese Aufgabe wird durch ein Verfahren nach Anspruch 1 eine Verwendung eines Vibrationsgebers nach Anspruch 7 gelöst. Vorteilhafte

Ausführungen der Erfindung sind in den Unteransprüchen angegeben.

Die im Folgenden im Zusammenhang mit dem Verfahren erläuterten Vorteile und Ausgestaltungen gelten sinngemäß auch für die beschriebene Vorrichtung (kein Teil der beanspruchten Erfindung) und umgekehrt.

Eine Grundidee der Erfindung ist es, das zu entpulvernde Bauteil zu Vibrationen im Ultraschallbereich anzuregen, wobei die Ultraschallanregung des Bauteils im wesentlichen ausschließlich über sich in Festkörpern ausbreitende Schwingungen erfolgt. Unter einer Vibration wird dabei eine periodische mechanische Schwingung verstanden. Die Schwingung wird dabei von einem Vibrationsgeber erzeugt und auf das zu entpulvernde Bauteil übertragen, welches dadurch zum Mitschwingen angeregt wird. Die Anregung des losen Pulvers durch Ultraschall bewirkt eine Pulverkornvereinzelung bzw. ein Auflösen von Agglomerationen. Dies führt dazu, daß das Pulver fließfähig oder fließfähiger wird und/oder sich die Rieselfähigkeit des Pulvers verbessert. Im Allgemeinen wird durch die Anregung des Bauteils mittels Ultraschallapplikation eine Fluidisierung des sich noch im bzw. am Bauteil befindenden Pulvers erreicht werden.

Als besonders geeignet haben sich dabei Vibrationen im unteren Ultraschallbereich erwiesen, insbesondere in einem Frequenzbereich von 20 kHz bis 40 kHz, vor allem für größere Pulverpartikel. Aber auch der Frequenzbereich oberhalb 40 kHz, insbesondere von 40 kHz bis 80 kHz, ist für diese Art des Entpulverns geeignet, vor allem für kleinere Pulverpartikel. Es eignen sich aber auch höhere Frequenzen im Bereich bis zu 400 kHz und darüber hinaus, beispielsweise bis 1 oder 2 MHz, vor allem für sehr kleine Pulverpartikel und spezielle Anwendungsbereiche. Die Wahl der Anregungsfrequenz ist dabei nicht nur von dem Material des zu entpulvernden Bauteils, d.h. insbesondere auch von der Art und Beschaffenheit des zu entfernenden Pulvers abhängig, sondern auch von dem Aufbau bzw. der Geometrie des anzuregenden, zu reinigenden Bauteils bzw. von dem Aufbau bzw. der Geometrie der gegebenenfalls vorhandenen Übertragungselemente, welche die Schwingungen von dem Vibrationsgeber an das Bauteil übertragen. Schwingungen, wie sie von Elektromotoren stammen, deren Welle eine Unwucht aufweist, eignen sich erfahrungsgemäß nicht für das erfindungsgemäße Entpulverungsverfahren. Die Schwingungen derartiger Unwuchtmotoren liegen außerhalb des Ultraschallbereiches.

Da das zu entpulvernde Bauteil den Vibrationen nur für vergleichsweise kurze Zeit ausgesetzt wird, ist eine Beeinträchtigung des Bauteils, z. B. Materialermüdung, Rißbildung oder dergleichen, nicht zu befürchten.

Eine Einkoppelung von Ultraschall in das zu reinigende Bauteil erfolgt dabei nicht über den Umweg eines Koppelmediums, insbesondere einer Flüssigkeit, sondern direkt, nämlich als eine festkörpergebundene bzw. festkörpergetragene Ultraschallanregung des Bauteils. Anders ausgedrückt erfolgt die Ultraschallübertragung direkt von dem Ultraschallgeber auf das Bauteil, d. h. von Festkörper zu Festkörper. Die gewünschte Ultraschallanregung des Bauteils erfolgt ausschließlich oder im wesentlichen ausschließlich über sich in Festkörpern ausbreitende Schwingungen.

Mit anderen Worten erfolgt die primäre Anregung des zu entpulvernden Bauteils nicht über ein (festkörperfremdes) Koppelmedium, wie Gas oder Flüssigkeit. Statt dessen erfolgt eine direkte Anregung des Bauteils durch eine Übertragung der mechanischen Schwingungen von einem Ultraschallgeber (Festkörper) zu einem Ultraschallempfänger (Festkörper), wobei es sich bei dem Ultraschallempfänger im Fall einer unmittelbaren Anregung um das zu entpulvernde Bauteil selbst handelt und im Fall einer mittelbaren Anregung um ein mit dem Bauteil verbundenes Konstruktionselement. Bei diesem Konstruktionselement handelt es sich beispielsweise um eine Aufbauplattform oder eine Transportplattform oder eine Entpulverungsplattform, auf der sich das Bauteil befindet.

Dabei hängt die Übertragung der Ultraschallschwingungen nicht nur von den Materialeigenschaften und den Geometrien der Festkörper ab, sondern auch davon, wie der Übergang zwischen den Grenzflächen der beiden Festkörper beschaffen ist. Insbesondere ist die Schallübertragung davon abhängig, ob die benachbarten Festkörper aneinander gedrückt sind oder ob die benachbarten Festkörper lediglich kraftfrei nebeneinander liegen, wobei sich die Schallübertragung zwischen den beiden Festkörpern mit zunehmender Flächenpressung verbessert.

Ein als Vibrationsgeber verwendeter Ultraschallwandler ist typischerweise derart aufgebaut, daß sich die eigentliche Ultraschallquelle, meist in Form eines Piezokristalls, im Inneren des Wandlergehäuses befindet. Der Piezokristall lenkt eine Membran aus, wodurch Ultraschallwellen emittiert werden. Aufgrund der Grenzflächenproblematik bei einem Schallübergang von Festkörper zu Festkörper ist die Anordnung des Piezokristalls im Wandlergehäuse und damit die Ausbreitungsrichtung der Ultraschallwellen in Richtung der Kontaktfläche (Grenzfläche) bei der Auswahl bzw. der Konstruktion eines geeigneten Vibrationsgebers zu beachten.

Bei einer unmittelbaren Anregung des Bauteils ist der Vibrationsgeber vorzugsweise lösbar unmittelbar mit dem Bauteil verbunden. Bei einer mittelbaren Anregung des Bauteils ist der Vibrationsgeber vorzugsweise lösbar mit der Aufbauplattform verbunden, auf der das Bauteil aufgebaut wurde und auf der sich das Bauteil während des Entpulverns noch immer befindet oder aber der Vibrationsgeber ist mit einer Transportplattform oder einer dedizierten Entpulverungsplattform verbunden, auf die das zu entpulvernde Bauteil zum Zweck des Transportes bzw. zum Zweck des Entpulverns gesetzt wird und auf welcher es ggf. befestigt ist.

Sowohl bei einer unmittelbaren Anregung als auch bei einer mittelbaren Anregung sind immer eine oder mehrere feste bzw. starre Verbindungen des Vibrationsgebers mit der jeweiligen anzuregenden Komponente, also dem zu entpulvernden Bauteil oder dem das Bauteil tragende Konstruktionselement, vorzusehen. Im einfachsten Fall handelt es sich dabei um eine vorzugsweise lösbare mechanische Verbindung, wie beispielsweise eine Klemmverbindung oder Schraubverbindung, welche eine Flächenpressung zwischen den beteiligten Festkörpern herstellt. Eine kraftfreie Berührung zweier lediglich aneinander liegender Festkörper ist zur Schwingungsübertragung weniger gut geeignet.

Je nach Anwendungsfall kann es von Vorteil sein, anstelle eines einzelnen Vibrationsgebers mehrere Vibrationsgeber zu verwenden, die an voneinander beabstandeten Stellen des Bauteils bzw. der Plattform angebracht sind. Ebenso ist es möglich, mehrere Bauteile mit Hilfe eines einzigen Vibrationsgebers zu entpulvern, insbesondere dann, wenn diese Bauteile über Stützstrukturen miteinander verbunden sind und/oder wenn diese Bauteile auf derselben Plattform angeordnet sind, in die der Vibrationsgeber die Ultraschallschwingungen einspeist. Die genaue Plazierung des Vibrationsgebers bzw. der Vibrationsgeber an dem Bauteil, den Stützstrukturen oder der Plattform, z.B. an deren Oberseite oder Unterseite, kann einer Optimierungsbetrachtung für jeden Einzelfall vorbehalten bleiben. Im einfachsten Fall erfolgt jedoch die Plazierung des Vibrationsgebers an einer beliebigen Stelle, welche einen geeigneten Festkörper-Festkörper-Übergang mit guter Flächenpressung gewährleistet.

Wenn von einem Entfernen des losen Pulvers aus dem Bauteil oder von einer Verbindung des Vibrationsgebers mit dem Bauteil die Rede ist, wird dabei stets davon ausgegangen, daß eventuell vorhandene Stützstrukturen innerhalb und/oder außerhalb des Bauteils Bestandteile des Bauteils sind, unter dem Bauteil also nicht nur der später vereinzelte, gegebenenfalls weiterverwendete Körper, sondern der gesamte aufgebaute 3D-Körper als Bauteil verstanden wird. Eine Verbindung des Vibrationsgebers mit dem Bauteil kann also ebenso gut eine Ankoppelung des Vibrationsgebers an eine Stützstruktur umfassen. Dies betrifft insbesondere solche Fälle, bei denen das Bauteil nicht direkt an der Aufbauplattform, sondern über eine Stützstruktur an der Aufbauplattform befestigt ist. Ist also von einem Entpulvern des Bauteils die Rede, so umfaßt dies stets auch das Entpulvern der eventuell am Bauteil vorhandenen Stützstrukturen.

Nach dem Anregen der Pulverreste durch Ultraschallvibration des Bauteils ist es vorgesehen, daß auf diese Weise fließfähig gemachte lose Pulver aus dem Bauteil zu entfernen. Dies erfolgt teilweise selbsttätig, ohne daß das Bauteil hierfür manipuliert werden müßte. Als ganz besonders vorteilhaft hat sich jedoch eine Ausführungsform der Erfindung erwiesen, bei der das Bauteil während des Anregens zumindest zeitweise so bewegt wird, daß das durch die eingetragenen Vibrationen fließfähige lose Pulver aus dem Bauteil herausfallen kann. Genauer gesagt können dann die fließfähigen Pulverreste im Inneren des Bauteils durch Hohlräume und/oder entlang von Bauteilstrukturen, einschließlich Stützstrukturen, in Richtung von Bauteilöffnungen abfließen und/oder aus diesen Bauteilöffnungen aus dem Bauteil nach unten herausfallen oder aber unmittelbar von einer Absaugung oder dergleichen, beispielsweise einem absaugenden Luftstrom, erfaßt und wegtransportiert werden.

Bei den entsprechenden Bewegungen des Bauteils handelt es sich vorzugsweise um Schwenkbewegungen um wenigstens eine Schwenkachse, vorzugsweise aber wenigstens zwei Schwenkachsen, welche vorteilhafterweise senkrecht zueinander stehen.

Das zu entpulvernde Bauteil wird dabei mit einem Vibrationsgeber versehen und auf einer Bewegungsbahn bewegt. Diese unmittelbare Anregung des Bauteils erfolgt dann, wenn das Bauteil bereits von der Aufbauplattform gelöst wurde oder aber bei solchen Bauteilen, die ohne eine Aufbauplattform hergestellt werden. Alternativ hierzu wird der Vibrationsgeber an der Aufbauplattform etc. angeklemmt oder anderweitig befestigt und mit der Plattform und dem darauf befindlichen Bauteil bewegt. Als Mittel zum Bewegen des Bauteils bzw. der Plattform mit dem Bauteil eignen sich beispielsweise präzise ansteuerbare Servomotoren.

Die konkrete Bewegungsbahn, auf der das Bauteil zum Zweck des Abfließens bzw. des Herausfallens des losen Pulvers aus dem Bauteil bewegt wird, genauer gesagt die Verläufe der Bewegungskurven bzw. Bewegungsbahnen, werden in einer vorteilhaften Ausführungsform der Erfindung in Abhängigkeit von dem Aufbau bzw. der Geometrie des jeweiligen Bauteils, insbesondere dem Verlauf der Kavitäten im Inneren des Bauteils und/oder der Position und Lage der Bauteilöffnungen, berechnet und/oder gesteuert. Hierdurch kann eine besonders schnelle und damit vorteilhaft kostengünstige Entpulverung erfolgen, wenn sich durch eine gezielte Bewegung des Bauteils auf einer bestimmten Bahnkurve eine Bewegung des Pulvers auf einem möglichst kurzen und/oder einem möglichst pulverdurchlässigen Weg zu einer Bauteilöffnung und damit ein optimiertes, insbesondere schnelleres und/oder vollständigeres Abließen oder Herausfallen der Pulverreste verwirklichen läßt. Alternativ dazu kann das Bewegen des Bauteils auch entlang einer lediglich zufälligen Bewegungsbahn erfolgen.

Abgesehen von einem (ultraschallfreien) Vorentpulverungsschritt, bei dem bereits loses, ausreichend fließfähiges Pulver aus dem Bauteil entfernt wird, beruht das vorgeschlagene Entpulvern des Bauteils vorzugsweise ausschließlich auf der Ultraschalleinkoppelung. Gleichwohl ist es möglich, während des Anregens mit Ultraschall zumindest zeitweise ein weiteres Verfahren zum Entpulvern einzusetzen, um den Entpulverungsvorgang weiter zu verbessern. Dabei handelt es sich insbesondere um ein Heraussaugen oder Herausblasen des losen Pulvers aus dem Bauteil. Dieses zusätzliche Heraussaugen oder Herausblasen mittels Unterdruck bzw. Druckluft kann zusätzlich zu dem Bewegen, insbesondere Verschwenken des Bauteils oder aber als Alternative dazu stattfinden. Das hier vorgeschlagene Heraussaugen oder Herausblasen von Pulverresten hat jedoch primär nichts mit einem Absaugen des bereits aus dem Bauteil herausgefallenen Pulvers zu tun. Ein solches Absaugen des Pulvers aus der Entpulverungskammer dient in erster Linie dazu, das lose Pulver einer weiteren Verwendung zuzuführen.

Als Teil des Entpulverungsverfahrens kann in einer Ausführungsform der Erfindung vorgesehen sein, daß das Bauteil im Anschluß an das Anregen in ein Flüssigkeitsbad, z. B. ein Wasserbad, getaucht wird und/oder einem weiteren Verfahren zum Entpulvern unterworfen wird. Das Tauchbad dient dabei insbesondere zum Binden von Pulverresten, die sich im Anschluß an die Beaufschlagung des Bauteils mit Ultraschallvibrationen noch immer im Inneren des Bauteils befinden. Die dann gebundenen Pulverreste werden vorzugsweise entweder durch wiederholte Anwendung des Anregungsprozesses mit Ultraschallschwingungen oder aber mit Hilfe eines weiteren Entpulverungsverfahrens entfernt.

Unabhängig davon sind nach dem Entpulvern weitere Nachbehandlungen des Bauteils möglich, z. B. eine Wärmebehandlung, eine chemische Behandlung, ein Entfernen von Stützstrukturen oder dergleichen.

Als ein besonderer Vorteil des erfindungsgemäßen Verfahrens hat es sich erwiesen, daß das Verfahren, zumindest der Schritt des Anregens mit Ultraschallschwingungen, in einer abgeschlossenen Kammer erfolgen kann. Mit anderen Worten befindet sich das zu entpulvernde Bauteil während des Entpulverns, insbesondere während des Anregen und Bewegens, in einer vorzugsweise zumindest staubdichten Kammer. Hierdurch werden vor allem ein Austreten des Pulverstaubes und damit eine Kontamination der Umwelt verhindert. Folgeschritte, wie z. B. das Eintauchen in ein Flüssigkeitsbad, können außerhalb der Kammer erfolgen.

Vorzugsweise ist diese Kammer zugleich auch gasdicht bzw. druckdicht, so daß das Anregen des Bauteils, je nach Anwendungsfall, entweder in Luft oder aber, abhängig vom Pulvermaterial, unter einem Inertgas, bzw., vor allem bei sehr reaktiven Material, unter Vakuum erfolgen kann.

Insbesondere bei Verwendung von Inertgas, wie Stickstoff oder einem der Edelgase, wird nicht nur eine chemische Reaktion und damit eine Verunreinigung des entfernten Pulvers verhindert, sondern es wird auch der Sauerstoffanteil reduziert oder ganz ersetzt, so daß auch das Risiko einer Explosion oder Verbrennung diesbezüglich besonders gefährdeter Pulver oder Pulvermischungen minimiert wird. Eine geschlossene Entpulverungskammer, die vorzugsweise die gleiche Größe aufweist, wie der Bauraum, um in der Lage zu sein, die gesamte Aufbauplattform mitsamt dem Bauteil aufzunehmen, gewährleistet damit auch die Wiederverwendbarkeit des Pulvers.

Das wiedergewonnene Pulver kann, ggf. nach dem Durchlaufen eines oder mehrerer Recycling-Prozesse, erneut als Aufbaumaterial verwendet werden.

Die Vorrichtung zum Entpulvern (kein Teil der beanspruchten Erfindung) weist den bereits erwähnten Vibrationsgeber auf. Dieser ist entweder unmittelbar an dem zu entpulvernden Bauteil oder aber an einem mit diesem Bauteil fest bzw. starr verbunden Konstruktionselement angebracht oder an einem solchen Konstruktionselement lösbar anbringbar. Die Entpulverungsvorrichtung sowie gegebenenfalls die geschlossene Entpulverungskammer sind vorzugsweise integraler Bestandteil der 3D-Fertigungsanlage. Alternativ dazu kann die Entpulverungsvorrichtung auch als nachgeschaltete, separate Anlage ausgeführt sein oder betrieben werden.

Das beschriebene Verfahren zur Entpulverung ist im Vergleich zu bekannten Entpulverungsverfahren hoch effizient. Es läßt sich damit ein deutlich höherer Prozentsatz an Pulverresten aus dem Bauteil entfernen, als bei herkömmlichen Verfahren und dies in deutlich kürzerer Zeit.

Mit der erfindungsgemäßen Lösung der Ultraschallanregung wird das Entpulvern von Bauteilen, die mit einem pulverbasierten Rapid-Prototyping-Verfahren hergestellt wurden, zugleich deutlich vereinfacht. Insbesondere läßt sich vergleichsweise einfach und mit geringem Aufwand ein halb- oder vollautomatischer Entpulverungsvorgang verwirklichen. Insbesondere können das Anregen des Bauteils mit Ultraschallschwingungen sowie das Bewegen des Bauteils zum Abfließen des gelösten Pulvers vollständig automatisiert erfolgen. Dadurch verringert sich die für das Entpulvern erforderliche Zeit, wodurch Kosten eingespart werden können. Bei geeigneten Ausführungen der Erfindung wird eine Umweltkontamination mit gesundheitsschädlichem Pulverstaub verhindert und/oder die Explosionsgefahr signifikant verringert.

Zugleich ist die Erfindung unabhängig von der Art des pulverbasierten Herstellungsverfahrens einsetzbar, also nicht nur bei Kunststoff- oder Metallpulver, wie sie beim selektiven Lasersintern (SLS), beim selektiven Laserschmelzen (SLM) oder beim selektiven Elektronenstrahlschmelzen (SEBM) usw. verwendet werden, sondern auch bei Gips-, Kunststoff-, Keramik- oder Glaspulver, die in pulverbasierten 3D-Druckverfahren als Ausgangsmaterial verwendet werden, bei denen die einzelnen Aufbauschichten lokal miteinander verklebt werden.

Das erfindungsgemäße Verfahren kann mit weiteren Entpulverungs- oder Reinigungsverfahren kombiniert werden, so beispielsweise auch mit einem klassischen Ultraschallreinigungsverfahren, bei dem ein Ultraschallgeber eine Flüssigkeit als Koppelungsmedium anregt und die Ultraschallschwingungen von dem Koppelungsmedium auf das zu reinigende Bauteil übertragen werden, welches sich in dem Flüssigkeitsbehälter befindet. Bei Bedarf können diese beiden Ultraschallmethoden, nämlich die trockene Ultraschallanwendung "Entpulvern" und die nasse Ultraschallanwendung "Reinigen", bei schwierig zu entpulvernden Bauteilen abwechselnd ausgeführt werden.

Das erfindungsgemäße Verfahren umfaßt einen Primärentpulverungsschritt und einen Sekundärentpulverungsschritt, wobei während des Primärentpulverungsschritts eine Vorentpulverung stattfindet, bei welcher das bereits lose Pulver aus dem Bauteil herausfallen kann (Grobentpulverung), und wobei während des Sekundärentpulverungsschrittes die Entpulverung mittels Ultraschallapplikation erfolgt (Feinentpulverung).

Ein Ausführungsbeispiel der Erfindung wird nachfolgend anhand der Zeichnungen näher erläutert. Hierbei zeigen:
- Fig. 1: eine stark vereinfachte Seitenansicht eines auf einer Aufbauplattform angeordneten Bauteils in einer Entpulverungskammer,
- Fig. 2: Komponenten der Entpulverungsvorrichtung in schematischer Darstellung.

Sämtliche Figuren zeigen die Erfindung nicht maßstabsgerecht, dabei lediglich schematisch und nur mit ihren wesentlichen Bestandteilen. Gleiche Bezugszeichen entsprechen dabei Elementen gleicher oder vergleichbarer Funktion.

Die Vorrichtung 1 zum Entpulvern eines Bauteils 2, das mit einem pulverbasierten Rapid-Prototyping-Verfahren hergestellt wurde, umfaßt einen Vibrationsgeber 3, der ausgebildet ist, das Bauteil 2 zu Vibrationen im Ultraschallbereich anzuregen. Bei dem Bauteil 2 handelt es sich beispielhaft um ein mittels Lasersintern aus einem Metallpulver hergestelltes Bauteil. Das Bauteil 2 ist unmittelbar und/oder über Stützstrukturen (nicht abgebildet) noch fest mit derjenigen Aufbauplattform 4 verbunden, auf der es mittels Lasersintern aufgebaut wurde. Der Vibrationsgeber 3 ist zum Zweck des Entpulverns an der Unterseite 5 der Aufbauplattform 4 angebracht worden, hier unter Ausbildung einer nicht näher dargestellten, lediglich schematisch skizzierten Klemmverbindung 6. Zur Herstellung einer optimalen Flächenpressung zwischen Vibrationsgeber 3 und Aufbauplattform 4 kann der Vibrationsgeber 3 auch an einer fest mit dem Gehäuse des Vibrationsgeber 3 verbundenen Montageplatte (nicht abgebildet) verbunden sein, beispielsweise mittels einer Schraubverbindung, an welche Montageplatte wiederum, beispielsweise mittels einer (Schnell-)Klemmverbindung die das Bauteil 2 tragende Aufbauplattform 4 unter Ausbildung einer optimalen Flächenpressung angebracht wird.

Bei dem Vibrationsgeber 3 handelt es sich um einen Ultraschallwandler, dessen Wandlergehäuse mit Hilfe der Klemmverbindung 6 unter Aufbau einer Flächenpressung plan an der Unterseite 5 der Aufbauplattform 4 anliegt. Der eine Membran auslenkende Piezokristall im Inneren des Wandlergehäuses wird von einem geeigneten Generator 7 angesteuert, mit dem er zu diesem Zweck verbunden ist. Der Generator 7 ist mit einer zentralen Steuerungseinheit 8 der Entpulverungsvorrichtung 1 verbunden.

Der Vibrationsgeber 3 erzeugt Ultraschall, hier beispielhaft in einem Bereich zwischen 20 kHz und 40 kHz, und überträgt diese mechanischen Schwingungen direkt, d.h. von Festkörper zu Festkörper, an die Aufbauplattform 4. Dieser Frequenzbereich ist zugleich der bevorzugte Bereich. Die Aufbauplattform 4 überträgt diese Vibrationen wiederum direkt oder über die Stützstrukturen an das Bauteil 2, so daß das Bauteil 2 bzw. die Stützstrukturen im wesentlichen über sich in einem oder mehreren Festkörpern ausbreitende Schwingungen angeregt wird. Die Übertragung des Ultraschalls erfolgt dabei von Festkörper zu Festkörper, also mittels Flächenpressung von der Aufbauplattform 4 über die Stützstrukturen, mit denen das Bauteil 2 mit der Aufbauplattform 4 verbunden ist, in das Bauteil 2. In dem skizzierten Ausführungsbeispiel wird das Bauteil 2 also mittelbar angeregt, nämlich über die Aufbauplattform 4 sowie ggf. die Stützstrukturen. Der Vibrationsgeber 3 kann für eine mittelbare Anregung auch an den Stützstrukturen des Bauteils 2 angebracht werden. Alternativ ist es möglich, den Vibrationsgeber 3 an dem Bauteil 2 selbst anzubringen, so daß eine unmittelbare Anregung des Bauteils 2 erfolgt. Werden die Stützstrukturen als Elemente des Bauteils 2 angesehen, würde auch das Anbringen des Vibrationsgebers 3 an den Stützstrukturen als eine unmittelbare Anregung des Bauteils 2 angesehen werden.

Das Anregen des Bauteils 2 bzw. der Stützstrukturen mit Ultraschallvibrationen erfolgt im Inneren 9 einer gas- und druckdichten Entpulverungskammer 10 unter einem Inertgas oder unter Vakuum. Die Entpulverungsvorrichtung 1 umfaßt zu diesem Zweck geeignete Mittel zur Bereitstellung des Vakuums bzw. des Inertgases, wie eine Überdruck-/Unterdruckeinheit 11 mit entsprechenden Pumpen, die dafür notwendigen Anschlüsse und Leitungen sowie Regelventile und dergleichen, wie dies dem Fachmann geläufig ist. Die Überdruck-/Unterdruckeinheit 11 ist ebenfalls mit der zentralen Steuereinheit 8 verbunden und von dieser kontrollierbar. Die Entpulverungskammer 10 weist zu diesem Zweck wenigstens einen Einlaß 12 und wenigstens einen Auslaß 13 auf. Die Tür der Entpulverungskammer 10, mit deren Hilfe das Bauteil in die Kammer hineingegeben und aus der Kammer herausgenommen werden kann, ist nicht abgebildet.

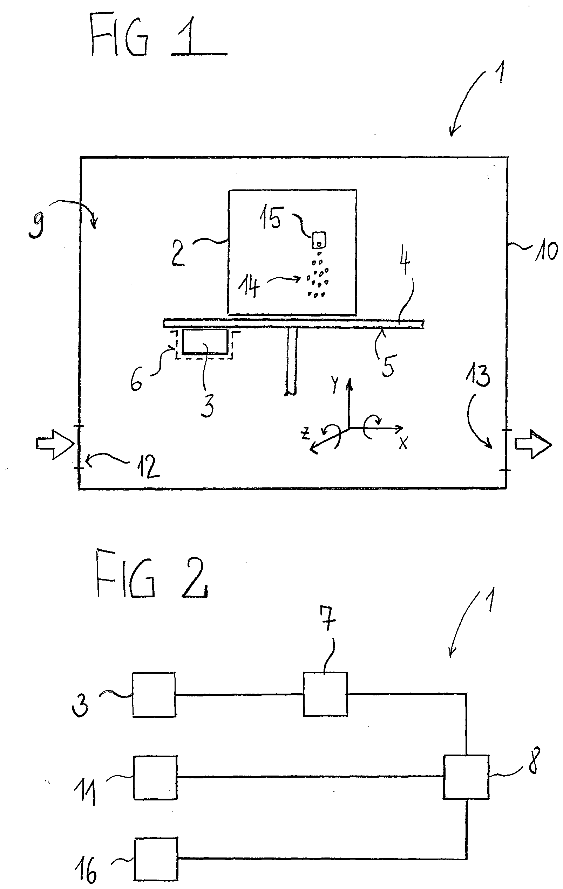

Die Plattform 4 wird mitsamt dem Bauteil 2 und den Stützstrukturen zumindest zeitweise, vorzugsweise aber während der gesamten Anregungsdauer derart bewegt, daß loses, insbesondere durch die Ultraschallbeaufschlagung fließfähig gemachtes, während der Bauteilfertigung nicht verfestigtes Pulver 14 aus dem Bauteil 2 bzw. den Stützstrukturen, genauer gesagt einer Bauteilöffnung 15 oder Kavität herausfallen kann. Dieses ist in Fig. 1 lediglich angedeutet. Hierzu umfaßt die Entpulverungsvorrichtung 1 eine Anzahl elektrischer Servomotoren 16 zum Verschwenken des Bauteils 2 und der Stützstrukturen mit der Plattform 4 um die x-Achse sowie die z-Achse als Schwenkachsen. Diese Bewegung des Bauteils 2 und der Stützstrukturen wird in Abhängigkeit von dem Aufbau bzw. der Geometrie des Bauteils 2 und der Stützstrukturen, insbesondere abhängig von Lage und Position der Hohlräume im Inneren des Bauteils 2 und der Stützstrukturen und der Öffnungen 15 an der Bauteil- bzw. Stützstrukturaußenseite, von der zentralen Steuerungseinheit 8 gesteuert, die zu diesem Zweck mit den Servomotoren 16 verbunden ist. Die Steuerungseinheit 8 umfaßt auch die benötigten Servoregler, der die Bewegungen des Bauteils 2 einschließlich der Stützstrukturen entsprechend der vorgegebenen Bewegungsbahn regelt.

Das Applizieren der Ultraschallschwingungen sowie das vorzugsweise gezielte Bewegen des Bauteils 2 mit den Stützstrukturen erfolgen hier vollautomatisch, d.h. daß nach dem Anbringen des Vibrationsgebers 3 und dem Schließen der Entpulverungskammer 10 keine weiteren Handhabungen mehr erforderlich sind und nach Abschluß des Verfahrens das entpulverte Bauteil 2 mit den Stützstrukturen lediglich aus der Kammer 10 entnommen werden muß. In einer Ausführungsform der Erfindung ist der Vibrationsgeber 3 dauerhaft mit der Aufbauplattform 4 verbunden oder ist in die Aufbauplattform 4 integriert, so daß der Schritt des Anbringens (und Abnehmens) des Vibrationsgebers 3 nicht notwendig ist.

Das Bauteil 2 wird vor der Ultraschallanwendung einem Vorentpulverungsschritt unterworfen, bei dem bereits loses, ausreichend fließfähiges Pulver aus dem Bauteil 2 sowie den Stützstrukturen entfernt wird. Im einfachsten Fall wird hierzu das Bauteil 2 mit seinen Stützstrukturen bzw. die das Bauteil 2 tragende Systemkomponente, beispielsweise die Aufbauplattform 4, auf geeignete Art und Weise bewegt, so daß das lose Pulver aus dem Bauteil herausfließt bzw. herausfällt.

Das Bauteil 2, ggf. mit seinen Stützstrukturen, wird vor der Ultraschallanwendung, die vorzugsweise im Inneren einer speziellen Entpulverungskammer 10 stattfindet, aus dem Baubehälter (Baukammer) entnommen, in dem das Bauteil Schicht für Schicht aufgebaut wurde, und in der Entpulverungskammer 10 plaziert. Dies erfolgt vorzugsweise nach dem Schritt der Vorentpulverung (Primärentpulverung), so daß anschließend das Entpulvern mittels Ultraschall (Sekundärentpulverung) erfolgen kann. Mit anderen Worten erfolgt das Entpulver mittels Ultraschall nicht in der Prozeßkammer (Baukammer, Baubehälter) des Rapid-Prototyping-Verfahrens. Vorzugsweise ist das Bauteil 2 bis zum Abschluß der Sekundärentpulverung mit der Aufbauplattform 4 verbunden.

Im einem typischen Anwendungsfall wird die Aufbauplattform 4 mit dem darauf aufgebauten Bauteil 2, einschließlich seiner Stützstrukturen, zunächst in der Baukammer gedreht, beispielsweise um 180°, um loses Pulver zu entfernen, bevor die Aufbauplattform 4 mit dem Bauteil 2 aus der Baukammer entnommen und in die Entpulverungskammer 10 eingesetzt wird, wo die Aufbauplattform 4 auf einer definierten Bewegungsbahn bewegt wird, während ein zuvor an die Aufbauplattform 4 angebrachter Vibrationsgeber 3 das Bauteil 2 in Schwingungen versetzt. Ausführungsformen der Erfindung, bei denen während des Anregens mit Ultraschallvibrationen weitere Entpulverungsverfahren angewendet werden, wie beispielsweise eine Beaufschlagung des Bauteils 2 mit Unterdruck oder Druckluft werden an dieser Stelle ebensowenig beschrieben, wie Ausführungsformen, bei denen im Anschluß an die Ultraschallbeaufschlagung das Bauteil 2 weiteren Entpulverungsverfahren unterworfen wird. Ebenfalls nicht betrachtet werden solche Nachbehandlungsprozesse, die im Anschluß an das Entpulvern möglich sind, um das hergestellte Bauteil 2 fertigzustellen oder weiterzubehandeln.

Das aus dem Bauteil 2 bzw. den Stützstrukturen gefallene Pulver 14 sowie der sich gegebenenfalls während des Entpulverungsvorgangs entwickelnde Pulverstaub im Inneren der Entpulverungskammer 10 wird mit geeigneten Mitteln, wie der bereits genannten Überdruck-/Unterdruckeinheit 11, aus der Entpulverungskammer 10 abgesaugt, wobei hierzu der wenigstens eine Auslaß 13 verwendet wird. Nach einem optionalen Recycling-Prozeß, wie beispielsweise einer Reinigung, wird das Pulver 14 einer erneuten Verwendung als Aufbaumaterial der 3D-Fertigungsanlage zugeführt.

### Bezugszeichenliste

- 1: Entpulverungsvorrichtung
- 2: zu entpulverndes Bauteil
- 3: Vibrationsgeber
- 4: Aufbauplattform
- 5: Unterseite der Plattform
- 6: Klemmverbindung
- 7: Schwingungsgenerator
- 8: zentrale Steuerungseinheit
- 9: Innere der Kammer
- 10: Entpulverungskammer
- 11: Druckeinheit
- 12: Kammereinlaß
- 13: Kammerauslaß
- 14: Pulver
- 15: Bauteilöffnung
- 16: Servomotor

## Patentansprüche

1. Verfahren zum Entpulvern eines Bauteils (2), das mit einem pulverbasierten Rapid-Prototyping-Verfahren hergestellt wurde, wobei das Bauteil (2) zu Vibrationen im Ultraschallbereich angeregt wird, wobei die Ultraschallanregung des Bauteils (2) im wesentlichen ausschließlich über sich in Festkörpern (2, 3, 4) ausbreitende Schwingungen erfolgt, wobei das Bauteil (2) vor dem Anregen mit Ultraschall aus einer Prozeßkammer entnommen wird, innerhalb der das Bauteil (2) mit dem Rapid-Prototyping-Verfahren hergestellt wurde, **dadurch gekennzeichnet, dass** das Bauteil (2) vor dem Anregen mit Ultraschall einem Vorentpulverungsschritt unterworfen wird, bei dem bereits loses, ausreichend fließfähiges Pulver aus dem Bauteil (2) entfernt wird, indem hierzu das Bauteil (2) bzw. die das Bauteil (2) tragende Systemkomponente, beispielsweise die Aufbauplattform (4), so bewegt wird, dass das lose Pulver aus dem Bauteil (2) herausfließt bzw. herausfällt.

2. Verfahren nach Anspruch 1, **dadurch gekennzeichnet, dass** das Bauteil (2) über die Aufbauplattform (4), auf der sich das Bauteil (2) befindet, oder über an dem Bauteil (2) angebrachte, während des Rapid-Prototyping-Verfahren hergestellte Stützstrukturen oder sowohl über die Aufbauplattform (4), auf der sich das Bauteil (2) befindet, als auch über an dem Bauteil (2) angebrachte, während des Rapid-Prototyping-Verfahren hergestellte Stützstrukturen mittelbar angeregt wird.

3. Verfahren nach Anspruch 1 oder 2, **dadurch gekennzeichnet, dass** das Bauteil (2) während des Anregens zumindest zeitweise gezielt auf einer bestimmten Bewegungsbahn bewegt wird.

4. Verfahren nach Anspruch 3, **dadurch gekennzeichnet, dass** diese Bewegung des Bauteils (2) in Abhängigkeit von dem Aufbau bzw. der Geometrie des Bauteils (2) gesteuert wird, insbesondere in Abhängigkeit von dem Verlauf der Kavitäten im Inneren des Bauteils (2) oder in Abhängigkeit von der Position und Lage der Bauteilöffnungen (15) oder in Abhängigkeit sowohl von dem Verlauf der Kavitäten im Inneren des Bauteils (2) als auch von der Position und Lage der Bauteilöffnungen (15).

5. Verfahren nach einem der Ansprüche 1 bis 4, **dadurch gekennzeichnet, dass** das Bauteil (2) während des Anregens zumindest zeitweise einem weiteren Verfahren zum Entpulvern unterworfen wird, insbesondere einem Heraussaugen oder Herausblasen losen Pulvers aus dem Bauteil (2).

6. Verfahren nach einem der Ansprüche 1 bis 5, **dadurch gekennzeichnet, dass** zumindest das Anregen in einer abgeschlossenen Kammer (10) erfolgt, wobei das Anregen in Luft oder unter einem Inertgas oder unter einem Vakuum erfolgt.

7. Verwendung eines Vibrationsgebers (3) zum Entpulvern eines Bauteils (2), welches zuvor mit einem pulverbasierten Rapid-Prototyping-Verfahren hergestellt wurde, indem er das Bauteil (2) zu Vibrationen im Ultraschallbereich anregt, wobei die Ultraschallanregung des Bauteils (2) im wesentlichen ausschließlich über sich in Festkörpern (2, 3, 4) ausbreitende Schwingungen erfolgt, wobei das Bauteil (2) vor dem Anregen mit Ultraschall aus einer Prozeßkammer entnommen wird, innerhalb der das Bauteil (2) mit dem Rapid-Prototyping-Verfahren hergestellt wurde, **dadurch gekennzeichnet, dass** das Bauteil (2) vor dem Anregen mit Ultraschall einem Vorentpulverungsschritt unterworfen wird, bei dem bereits loses, ausreichend fließfähiges Pulver aus dem Bauteil (2) entfernt wird, indem hierzu das Bauteil (2) bzw. die das Bauteil (2) tragende Systemkomponente, beispielsweise die Aufbauplattform (4), so bewegt wird, dass das lose Pulver aus dem Bauteil (2) herausfließt bzw. herausfällt.

## Claims

1. Method for depowdering a component (2) which has been produced by a powder-based rapid prototyping process, wherein the component (2) is excited to vibrations in the ultrasonic range, wherein the ultrasonic excitation of the component (2) takes place essentially exclusively via vibrations propagating in solid bodies (2, 3, 4), the component (2) being removed from a process chamber, within which the component (2) was produced by the rapid prototyping method, prior to excitation with ultrasound, **characterised in that** the component (2) is subjected to a pre-depowdering step prior to excitation with ultrasound, in which already loose, sufficiently flowable powder is removed from the component (2) by moving the component (2) or the system component supporting the component (2), for example the build-up platform (4), in such a way that the loose powder flows or falls out of the component (2).

2. Method according to claim 1, **characterised in that** the component (2) is excited indirectly via the mounting platform (4) on which the component (2) is located, or via support structures attached to the component (2) and produced during the rapid prototyping process or both via the mounting platform (4) on which the component (2) is located and via support structures attached to the component (2) and produced during the rapid prototyping process.

3. Method according to claim 1 or 2, **characterised in that** the component (2) is moved at least temporarily along a specific path of movement during the excitation.

4. Method according to claim 3, **characterised in that** this movement of the component (2) is controlled as a function of the structure or geometry of the component (2), in particular as a function of the course of the cavities in the interior of the component (2) or as a function of the position and location of the component openings (15) or as a function of both the course of the cavities in the interior of the component (2) and the position and location of the component openings (15).

5. Method according to one of claims 1 to 4, **characterised in that** the component (2) is subjected at least temporarily to a further process for de-powdering during the excitation, in particular a sucking out or blowing out of loose powder from the component (2).

6. Method according to one of claims 1 to 5, **characterised in that** at least the excitation takes place in a closed chamber (10), the excitation taking place in air or under an inert gas or under a vacuum.

7. Use of a vibration generator (3) for depowdering a component (2) which was previously manufactured using a powder-based rapid prototyping process by exciting the component (2) to vibrate in the ultrasonic range, wherein the ultrasonic excitation of the component (2) takes place essentially exclusively via vibrations propagating in solid bodies (2, 3, 4), the component (2) being removed from a process chamber, within which the component (2) was produced by the rapid prototyping method, prior to excitation with ultrasound, **characterised in that** the component (2) is subjected to a pre-depowdering step prior to excitation with ultrasound, in which already loose, sufficiently flowable powder is removed from the component (2) by moving the component (2) or the system component supporting the component (2), for example the mounting platform (4), in such a way that the loose powder flows or falls out of the component (2).

## Revendications

1. Procédé de dépoudrage d'un composant (2) qui a été fabriqué par un procédé de prototypage rapide basé sur la poudre, dans lequel le composant (2) est excité à des vibrations dans le domaine des ultrasons, l'excitation ultrasonique de la pièce (2) s'effectuant essentiellement exclusivement par des vibrations se propageant dans des corps solides (2, 3, 4), la pièce (2) étant prélevée, avant l'excitation par ultrasons, d'une chambre de traitement dans laquelle la pièce (2) a été fabriquée par le procédé de prototypage rapide, **caractérisé en ce que** la pièce (2) est soumise, avant l'excitation par ultrasons, à une étape de dépoudrage préalable au cours de laquelle la poudre déjà détachée et suffisamment fluide est éliminée de la pièce (2), en déplaçant à cet effet la pièce (2) ou le composant du système portant la pièce (2), par exemple la plate-forme de montage (4), de telle sorte que la poudre détachée s'écoule ou tombe hors de la pièce (2).

2. Procédé selon la revendication 1, **caractérisé en ce que** le composant (2) est stimulé indirectement par la plate-forme de montage (4) sur laquelle se trouve le composant (2), ou soit par des structures de support fixées au composant (2) et fabriquées pendant le procédé de prototypage rapide ou soit par la plate-forme de montage (4) sur laquelle se trouve la pièce (2) et par des structures de support fixées à la pièce (2) et fabriquées pendant le processus de prototypage rapide.

3. Procédé selon la revendication 1 ou 2, **caractérisé en ce que** le composant (2) est déplacé de manière ciblée au moins temporairement sur une trajectoire de déplacement déterminée pendant l'excitation.

4. Procédé selon la revendication 3, **caractérisé en ce que** ce mouvement du composant (2) est commandé en fonction de la structure ou de la géométrie du composant (2), en particulier en fonction du tracé des cavités à l'intérieur du composant (2) ou en fonction de la position et de l'emplacement des ouvertures (15) du composant ou en fonction aussi bien du tracé des cavités à l'intérieur de la pièce (2) que de la position et de l'emplacement des ouvertures (15) de la pièce.

5. Procédé selon l'une des revendications 1 à 4, **caractérisé en ce que** l'élément (2) est soumis, pendant l'excitation, au moins temporairement, à un autre procédé de dépoudrage, en particulier à une aspiration ou à un soufflage de poudre libre hors de l'élément (2).

6. Procédé selon l'une quelconque des revendications 1 à 5, **caractérisé en ce qu'**au moins l'excitation est effectuée dans une chambre fermée (10), l'excitation étant effectuée dans l'air ou sous un gaz inerte ou sous un vide.

7. Utilisation d'un générateur de vibrations (3) pour le dépoudrage d'une pièce (2) qui a été fabriquée au préalable par un procédé de prototypage rapide à base de poudre, en excitant le composant (2) à des vibrations dans la plage des ultrasons, l'excitation ultrasonique du composant (2) s'effectuant essentiellement exclusivement par des vibrations se propageant dans des corps solides (2, 3, 4), la pièce (2) étant prélevée, avant l'excitation par ultrasons, d'une chambre de traitement dans laquelle la pièce (2) a été fabriquée par le procédé de prototypage rapide, **caractérisé en ce que** la pièce (2) est soumise, avant l'excitation par ultrasons, à une étape de dépoudrage préalable au cours de laquelle la poudre déjà détachée et suffisamment fluide est éliminée de la pièce (2), en déplaçant à cet effet l'élément (2) ou le composant du système portant l'élément (2), par exemple la plate-forme de montage (4), de telle sorte que la poudre non adhérente s'écoule ou tombe de l'élément (2).
